(19) Europäisches Patentamt
European Patent Office
Office européen des brevets

(11) EP 2 206 430 A1

(12) **EUROPEAN PATENT APPLICATION**
published in accordance with Art. 153(4) EPC

(43) Date of publication:
**14.07.2010 Bulletin 2010/28**

(21) Application number: **08842266.2**

(22) Date of filing: **23.10.2008**

(51) Int Cl.:
***A01N 33/12** (2006.01)* ***A01N 33/08** (2006.01)*
***A01N 33/24** (2006.01)* ***A01N 37/44** (2006.01)*
***A01P 3/00** (2006.01)*

(86) International application number:
**PCT/JP2008/069703**

(87) International publication number:
**WO 2009/054540 (30.04.2009 Gazette 2009/18)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **26.10.2007 JP 2007278602**

(71) Applicant: **Kao Corporation**
**Chuo-Ku**
**Tokyo 103-8210 (JP)**

(72) Inventors:
- **KUWANO, Youichi**
**Wakayama-shi**
**Wakayama 640-8580 (JP)**
- **ISHIKAWA, Akira**
**Wakayama-shi**
**Wakayama 640-8580 (JP)**
- **TANAKA, Atsushi**
**Wakayama-shi**
**Wakayama 640-8580 (JP)**

(74) Representative: **HOFFMANN EITLE**
**Patent- und Rechtsanwälte**
**Arabellastrasse 4**
**81925 München (DE)**

(54) **ANTIFUNGAL COMPOSITION**

(57) The present invention provides the antifungal composition, containing the compound (a) selected from specific quaternary ammonium salts and specific amine oxides and the sequestering agent (b) having a calcium-chelating constant of 4 to 12 at a mass ratio (a)/(b) of 0.01 to 10.



Printed by Jouve, 75001 PARIS (FR)

## Description

Field of the invention

The present invention relates to an antifungal composition (inhibitor of fungal growth or mycotic growth) used against fungi.

Background of the invention

Japanese climate is hot and humid, which is suitable for fungi such as mold to proliferate in living spaces. In recent years, airtight houses such as an apartment have been increased, and laundry has tended to be hung inside a house not only in the rainy season but also habitually. In such circumstances, there is an emerging problem of mold proliferation on a cloth, a curtain, a couch, a wallpaper, a corner of a floor, a wall behind a furniture, and the like. Therefore, there is a demand for a method of safely controlling mold proliferation.

There have been many known applications of quaternary ammonium salts and amine oxides as an antibacterial agent. One of the antibacterial agents is JP-B3571554. EDTA has been found that it enhances an antibacterial power of a cationic antibacterial agent ("Boufu/Sakkin zai no kagaku (Jon J. Kabara, COSMETIC AND DRUG PRESERVATION PRINCIPLES AND PRACTICE"), translated by Koichi Yoshimura et. al., Fragrance Journal Ltd., p.268), and that it prevents a Pseudomonas bacterium from being resistant to a quaternary ammonium salt (D. R. MacGregor and P. R. Ellicker, Can. J. Microbiol., 4: 499-503, 1958). Relating to these effects of EDTA to bacteria, EDTA has been told that it picks a metal ion such as a calcium ion out of a cell membrane to cause a partial solubilization of the cell membrane (S. G. Wilkinson, "Sensitivity to ethylenediaminetetraacetic acid, in Resistance of Pseudomonas aeruginosa", M. R. W. Brown, ed., Wiley, London, 1975).

Summary of the Invention

The present invention relates to an antifungal composition, containing component (a) and component (b) at a mass ratio (a) / (b) of 0.01 to 10:

component (a): at least one compound selected from quaternary ammonium salts represented by formula (1), amine oxides represented by formula (2), and amine oxides represented by formula (3):

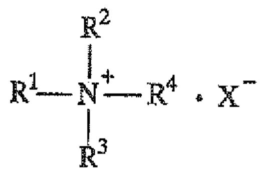

(1)

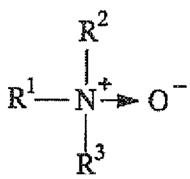

(2)

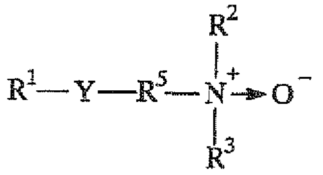

(3)

wherein, $R^1$ represents an alkyl group having 1 to 22 carbon atoms or an alkenyl group having 3 to 22 carbon atoms; $R^2$ represents an alkyl group having 1 to 22 carbon atoms, an alkenyl group having 3 to 22 carbon atoms, a hydroxyalkyl group having 1 to 3 carbon atoms, or a benzyl group; $R^3$ and $R^4$ each represent an alkyl group having 1 to 3 carbon atoms, a hydroxyalkyl group having 1 to 3 carbon atoms, or a benzyl group; $R^5$ represents an alkylene group having 1 to 5 carbon atoms; Y represents $-CONR^6-$, $-NR^6CO-$, -COO-, or - OCO-, wherein $R^6$ represents a hydrogen atom or an alkyl group having 1 to 3 carbon atoms; and, $X^-$ represents a halide ion, an ion of fatty acid having 1 to 14 carbon atoms, or an ion of alkylsulfate having 1 to 3 carbon atoms; and
component (b): a sequestering agent having a calcium-chelating constant of 4 to 12.

The present invention also relates to use of a composition containing components (a) and (b) at a mass ratio (a)/(b) of 0.01 to 10 as an antifungal agent.

Detailed description of the invention

Quaternary ammonium salts and amine oxides have conventionally shown effects on bacteria. However, effects thereof on fungal molds are unsatisfactory. JP-B3571554 does not describe effects on fungal molds. D. R. MacGregor and P. R. Ellicker, Can. J. Microbiol., 4: 499-503, 1958, and S. G. Wilkinson, "Sensitivity to ethylenediaminetetraacetic acid, in Resistance of Pseudomonas aexuginosa", M. R. W. Brown, ed., Wiley, London, 1975 do not describe effects of EDTA on fungal molds to prevent being resistant to a quaternary ammonium salt. Bacteria are prokaryotes lacking a cell nucleus and having cytoplasm, genes, and others enclosed in a cell wall. Molds are, differentially bacteria, eukaryotes having a cell nucleus in a cell, that cell nucleus contains genes. Considering the difference in cell structures, eukaryotic molds probably have more complicated metabolic system of drugs than that of prokaryotic bacteria and exhibit different characteristics to effects of EDTA and agents of destroying or denaturing a cell membrane, or inhibiting cell functions from that of prokaryotic bacteria. Thus, the reason of often failing to achieve similar effects on molds to that on bacteria when sterilizing and antibacterial techniques against bacteria are simply applied for molds without modification would be attributed to the difference in cell structures.

The present invention provides an antifungal composition that is safe and has high effects to control proliferation of molds, and provides a method of preventing molds.

According to the present invention, provided is an antifungal composition that is safe, can be safely used in general households, and has high effects to control proliferation of molds. Use of the composition of the present invention to a subject will prevent proliferation of molds. There have been little studies for controlling fungal molds and almost no finding like the present invention that a combination use of a specific quaternary ammonium salt and a specific sequestering agent at a specific mass ratio provides increased effects for controlling molds.

<Component (a) >

In formulae (1) to (3), $R^1$ represents an alkyl group having 1 to 22 carbon atoms or an alkenyl group having 3 to 22 carbon atoms, preferably an alkyl group having 1 to 18 carbon atoms, more preferably an alkyl group having 1 to 12 carbon atoms, and even more preferably an alkyl group having 4 to 12 carbon atoms. $R^2$ represents an alkyl group having 1 to 22 carbon atoms, an alkenyl group having 3 to 22 carbon atoms, a hydroxyalkyl group having 1 to 3 carbon atoms or a benzyl group, preferably an alkyl group having 1 to 18 carbon atoms or a benzyl group, and more preferably an alkyl group having 1 to 12 carbon atoms. $R^3$ and $R^4$ each represent an alkyl group having 1 to 3 carbon atoms, a hydroxyalkyl group having 1 to 3 carbon atoms, or a benzyl group, and preferably an alkyl group having 1 to 3 carbon atoms. $R^5$ represents an alkylene group having 1 to 5 carbon atoms, and preferably an alkylene group having 1 to 3 carbon atoms. Y represents $-CONR^6-$, $-NR^6CO-$, -COO-, or - OCO-, in which $R^6$ represents a hydrogen atom or an alkyl group having 1 to 3 carbon atoms. $X^-$ represents a halide ion, an ion of fatty acid having 1 to 14 carbon atoms, or an ion of alkylsulfate having 1 to 3 carbon atoms.

From the viewpoint of increasing antifungal properties, it is preferable that component (a) contains quaternary ammonium salts represented by formula (1) or amine oxides represented by formula (2). Amine oxides represented by formula (3) are more preferable. Even more preferred is at least one compound selected from quaternary ammonium compounds (a1) that are compounds of formula (1) in which one or two groups bonding to the nitrogen atom are alkyl groups each having 1 to 12 carbon atoms and the other groups are selected from alkyl groups each having 1 to 3 carbon atoms, hydroxyalkyl groups each having 1 to 3 carbon atoms, and a benzyl group, and amine oxide compounds (a2) represented by formulae (2) and (3) in which one group bonding to the nitrogen atom is an alkyl group having 10 to 14 carbon atoms or an alkanoylaminopropyl group having 10 to 14 carbon atoms and the other groups are groups each selected from an alkyl group having 1 to 3 carbon atoms and a hydroxylalkyl group having 1 to 3 carbon atoms. In component (a), two or more compounds may be used together.

<Component (b)>

Examples of component (b) include aminoacetic acid chelating agents such as ethylenediaminetetraacetic acid, nitrilotriacetic acid, and hydroxyethyliminodiauetic acid; phosphonic acid chelating agents such as 1-hydroxyethylidene-1,1-diphosphonic acid, 1-hydroxy-1,1-diphosphonic acid, ethanehydroxy-1,1,2-triphosphonic acid, ethane-1,2-dicarboxy-1,2-diphosphonic acid, and methanehydroxyphosphonic acid; carboxylic acid polymer chelating agents such as acrylic acid-maleic acid copolymer; and polyphosphoric acid chelating agents such as tripolyphosphoric acid. These chelating agents may be of a salt form. Among them, particularly preferred are aminoacetic acid chelating agents.

From the viewpoint of increasing antifungal properties, component (b) has a calcium-chelating constant of 4 to 12, preferably 5 to 12, and more preferably 6 to 12.

As used herein, the "calcium-chelating constant" refers a value determined by the following method.

(Measurement of calcium-chelating constant)

A solution of 0.1 mol/L $NH_4Cl$-$NH_4OH$ (pH 10) is prepared as a buffer. The buffer is used for preparing all sample solutions. To measure a concentration of $Ca^{2+}$, an ion meter, Orion 920A, and a $Ca^{2+}$ ion electrode are used. First, a relationship between calcium chloride concentration and potential of the electrode is determined to generate a calibration curve. Next, a solution of $5.36*10^{-2}$ mol/L calcium chloride and a solution of $5.36*10^{-4}$ mol/L sample chelating agent are prepared. To 100 ml of the solution of the sample chelating agent is added 1 ml of the solution of calcium chloride, and stirred for five minutes. A concentration of remaining $Ca^{2+}$ is measured using the $Ca^{2+}$ ion electrode. A calcium-chelating constant (Ca-chelating constant) is determined according to the following formula on the assumption that the chelating agent and $Ca^{2+}$ form a chelate complex at a ratio of 1:1.

$$\text{Ca-chelating constant} = \log_{10}\left(\frac{[M]_{Total} - [M]}{[M]\{[L]_{Total} - ([M]_{Total} - [M])\}}\right)$$

$[M]_{total}$: initial $Ca^{2+}$ concentration
$[L]_{titak}$: initial chelating agent concentration
$[M]$: remaining $Ca^{2+}$ concentration

<Component (c)>

The antifungal composition of the present invention preferably further contains a compound represented by formula (4) as component (c).

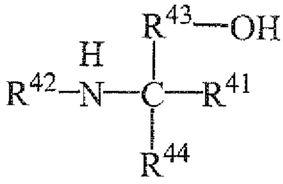

(4)

wherein, $R^{41}$ represents a hydrogen atom, an alkyl group having 1 to 5 carbon atoms, or a hydroxyalkyl group having 1 to 5 carbon atoms; $R^{42}$ represents a hydrogen atom, an alkyl group having 1 to 12 carbon atoms, or a hydroxyalkyl group having 1 to 5 carbon atoms; $R^{43}$ represents an alkylene group having 1 to 5 carbon atoms; and, $R^{44}$ represents an alkyl group having 1 to 5 carbon atoms or a hydroxyalkyl group having 1 to 5 carbon atoms.

In formula (4), $R^{41}$ represents a hydrogen atom, an alkyl group having 1 to 5 carbon atoms or a hydroxyalkyl group having 1 to 5 carbon atoms, in which an alkyl group and a hydroxyalkyl group may be linear or branched. Examples of the alkyl group having 1 to 5 carbon atoms include methyl, ethyl, n-propyl, isopropyl, n-butyl, isobutyl, t-butyl, n-pentyl, and isopentyl. Examples of the hydroxyalkyl group having 1 to 5 carbon atoms include hydroxymethyl, 2-hydroxyethyl, 2-hydroxypropyl, 3-hydroxypropyl, 2-hydroxybutyl, 3-hydroxybutyl, and 4-hydroxybutyl.

From the viewpoint of availability, $R^{41}$ is preferably a hydrogen atom, a methyl group, an ethyl group, a hydroxymethyl group, or a 2-hydroxyethyl group, and more preferably a hydrogen atom, a hydroxymethyl group, or a 2-hydroxyethyl group.

$R^{42}$ represents a hydrogen atom, an alkyl group having 1 to 12, preferably 1 to 6 carbon atoms, or a hydroxyalkyl group having 1 to 5 carbon atoms, in which an alkyl group and a hydroxyalkyl group may be linear, branched, or cyclic. Examples of the alkyl group having 1 to 12 carbon atoms include methyl group, ethyl group, n-propyl group, isopropyl group, n-butyl group, isobutyl group, t-butyl group, n-pentyl group, isopentyl group, n-hexyl group, isohexyl group, n-decyl group, isodecyl group, cyclopentyl group, and cyclohexyl group. Examples of the hydroxyalkyl group having 1 to 5 carbon atoms include those described for $R^{41}$ above.

From the viewpoint of availability, $R^{42}$ is preferably a hydrogen atom, an alkyl group having 1 to 3 carbon atoms, or a hydroxyethyl group, and more preferably a hydrogen atom.

$R^{43}$ represents an alkylene group having 1 to 5 carbon atoms. Examples of the alkylene group having 1 to 5 carbon atoms include methylene group, ethylene group, propylene group, and butylene group. Preferred is a methylene group. $R^{44}$ represents an alkyl group having 1 to 5 carbon atoms or a hydroxyalkyl group having 1 to 5 carbon atoms. Examples of the alkyl group having 1 to 5 carbon atoms include methyl group, ethyl group, n-propyl group, isopropyl group, n-butyl group, isobutyl group, t-butyl group, n-pentyl group, and isopentyl group. Preferred is a methyl group. Examples of the hydroxyalkyl group having 1 to 5 carbon atoms include hydroxymethyl group, hydroxyethyl group, hydroxypropyl group, and hydroxybutyl group. Preferred is a hydroxymethyl group.

Specific examples of the amino compound represented by formula (4) or a salt thereof include tris(hydroxymethyl)aminomethane, 2-amino-2-methyl-1-propanol, 2-amino-1,3-propanediol, 2-amino-2-methyl-1,3-propanediol, 2-amino-2-ethyl-1,3-propanediol, 2-amino-2-hydroxymethyl-1,3-propanediol, 2-amino-2-hydroxyethyl-1,3-propanediol, 4-amino-4-hydroxypropyl-1,7-heptanediol, 2-(N-ethyl)amino-1,3-propanediol, 2-(N-ethyl)amino-2-hydroxymethyl-1,3-propanediol, 2-(N-decyl)amino-1,3-propanediol, 2-(N-decyl)amino-2- hydroxymethyl-1,3-propanediol, and salts thereof with acids such as hydrochloric acid, sulfuric acid, nitric acid, phosphoric acid and carbonic acid.

From the viewpoint of stability in blending, among them, one or more compounds selected from tris (hydroxymethyl)aminomethane, 2-amino-2-methyl-1-propanol, 2-amino-1,3-propanediol, 2-amino-2-methyl-1,3-propanediol, 2-amino-2-ethyl-1,3-propanediol, 2-amino-2-hydroxymethyl-1,3-propanediol, 2-amino-2-hydroxyethyl-1,3-propanediol, and salts thereof with acids such as hydrochloric acid are particularly preferably used.

When the amino compound represented by formula (4) is used in a form of salt with hydrochloric acid or the like, pH can be controlled by adding a base. Examples of the base that can be used include sodium hydroxide, potassium hydroxide, magnesium hydroxide, calcium hydroxide, monoethanolamine, diethanolamine, triethanolamine, methylethanolamine, and dimethylethanolamine. Among these bases, preferred are sodium hydroxide and potassium hydroxide.

The amino compound represented by formula (4) can be produced by a standard method.

<Antifungal composition>

In the antifungal composition of the present invention, a mass ratio of component (a) to component (b), (a)/(b) is 0.01 to 10, preferably 0.01 to 8, and more preferably 0.1 to 8.

With satisfying the mass ratio, the antifungal composition of the present invention preferably contains component

(a) in an amount of 0.01 to 5% by mass, more preferably 0.01 to 1% by mass, and even more preferably 0.01 to 0.5% by mass.

The antifungal composition of the present invention also preferably contains component (b) in an amount of 0.01 to 1% by mass, more preferably 0.01 to 0.5% by mass, and even more preferably 0.01 to 0.3% by mass.

In the antifungal composition of the present invention, a content of component (c) is preferably 0 to 10% by mass, more preferably 0.1 to 9% by mass, and even more preferably 0.1 to 5% by mass. A mass ratio of component (c) to component (a), (c)/(a) is preferably 0.02 to 1000, more preferably 0.03 to 900, and even more preferably 0.1 to 500.

The antifungal composition of the present invention can further contain a surfactant, an extract, a perfume, and a solvent. The rest part of the composition is generally water.

The antifungal composition of the present invention preferably has a pH of 6 to 10, and more preferably 7 to 9 at 20°C.

<Method of preventing molds>

The antifungal composition of the present invention can exhibit good mold-proof and antifungal effects through contacting with a subject (cloth, curtain, carpet, couch, tail, wall, wallpaper, floor, subfloor, tatami) (a target surface). The subject is preferably dried after contacted. A method of contacting the antifungal composition of the present invention to a target surface is not specifically limited. Examples of the method include spraying the antifungal composition on the subject, applying the antifungal composition to the subject, immersing the subject in a treatment bath containing the antifungal composition. In any method, the subject is preferably dried after contacted. The present invention relates to a method of preventing proliferation of molds with the antifungal composition of the present invention.

Examples

The following Examples demonstrate the present invention. Examples are intended to illustrate the present invention and not to limit the present invention.

Example 1

1) mold suspension

Aspergillus. niger was cultured in a potato dextrose agar medium. Spores and mycelia thereof were dispersed in a sterile aqueous solution of 0.05% Tween (Rheodol TW-0120). The dispersion was adjusted to have an optical density of 0.1 at 600 nm.

2) method of evaluation

To a knitted cotton fabric (1.5 cm by 1.5 cm) previously sterilized (autoclave: 2 atm (202650 Pa), 125°C/15min) were applied 200 μl of a sterilized aqueous solution of 2.4% potato dextrose, 100 μl of the mold suspension, and 200 μl of an antifungal composition prepared as below (these were dropped on the fabric with an auto-pipetter in a quantified amount so as to spread across the fabric as wide as possible) to give a mold test fabric. The mold test fabric was placed on a Petri dish and stored for 4 days in a unit desiccator (As One Corporation) at 25°C and 100%RH. The stored fabric was visually examined for a state of mycelia and spores of mold growing. In preparation of the antifungal composition, saline used was adjusted to pH 7.7 with 10% hydrochloric acid.

3) rating of visual examination

A rating of visual examination was 5-point scale from 0 to 4 according to growth of mold as shown in Table 1.

0 and 1 on the scale refer that proliferation of the mold is prevented and the antifungal composition exhibits significant antifungal effects. Results are shown in Table 2.

Table 1

| Rating | State of mold |
|---|---|
| 0 | None(not growing) |
| 1 | Growing on edges of test fabric (a growing area is about 1/5) |
| 2 | Growing on edges of test fabric (a growing area is about 1/4) |

(continued)

| Rating | State of mold |
|---|---|
| 3 | Growing excluding a center part of test fabric (a growing area is about 1/2) |
| 4 | Growing across the test fabric |

Table 2

| | Rating (state of mold) |
|---|---|
| Comparative example A | 4 |
| Example B | 0 |
| Example C | 0 |
| Example D | 0 |
| Example E | 0 |
| Comparative example F | 2 |
| Comparative example G | 4 |
| Comparative example H | 2 |
| Comparative example I | 4 |
| Comparative example J | 2 |

Comparative Example A

saline 100%

Example B

didecyldimethylammonium chloride 0.1%
EDTA* 0.05%
saline 99.85%
*EDTA: ethylenediaminetetraacetic acid (calcium-chelating constant = 12) (the same is applied below)

Example C

didecyldimethylammonium chloride 0.1%
Dequest 2010CS* 0.05%
saline 99.85%
*Dequest 2010CS: phosphate chelating agent (Solutia Japan Ltd., calcium-chelating constant = 5 to 6)

Example D

lauryldimethylamine oxide* 0.25%
EDTA 0.05%
saline 99.70%

*lauryldimethylamine oxide: Amphitol 20N (Kao Corporation)

Example E

APAO* 0.25%

EDTA 0.05%

saline 99.70%

*APAO: laurylamidopropyldimethylamine oxide (the same is applied below)

Comparative Example F

didecyldimethylammonium chloride 0.1%
saline 99.90%

Comparative Example G

citric acid 0.1%
saline 99.90%

Comparative Example H

APAO 0.15%
saline 99.85%

Comparative Example I

EDTA 0.05%
saline 99.95%

Comparative Example J

didecyldimethylammonium chloride 0.10%
citric acid* 0.10%
saline 99.80%
*citric acid (calcium-chelating constant = 3)

Example 2

Mold test fabrics were prepared in the same way as in Example 1, except that antifungal compositions prepared below were applied in each amount of 150μl. Appearance of mycelia and spores of the mold was visually examined in the same way as in Example 1. Results are shown in Table 3.

Table 3

| | Rating (state of mold) |
|---|---|
| Comparative example K | 4 |
| Example L | 1 |
| Example M | 0 |
| Example N | 0 |

Comparative Example K

saline 100%

Example L

Tween 80* 0.05%
didecyldimethylammonium chloride 0.1%
EDTA 0.05%
saline 99.80%
*Tween 80: polyoxyethylene (average addition mole number: 20) sorbitan monooleate (the same is applied below)

Example M

Tween 80 0.05%
didecyldimethylammonium chloride 0.1%
EDTA 0.05%
Tris* 0.4%
saline 99.40%
*Tris: 2-amino-2-hydroxymethylpropane-1,3-diol (the same is applied below)

Example N

Tween 80 0.05%
didecyldimethylammonium chloride 0.1%
EDTA 0.05%
Tris 2.0%
saline 97.80%

**Claims**

**1.** An antifungal composition, comprising component (a) and component (b) at a mass ratio (a) / (b) of 0.01 to 10:

component (a): at least one compound selected from the group consisting of quaternary ammonium salts represented by formula (1), amine oxides represented by formula (2), and amine oxides represented by formula (3);

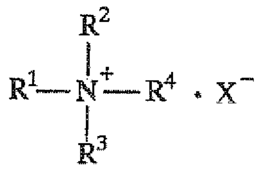

(1)

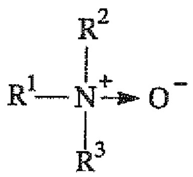

(2)

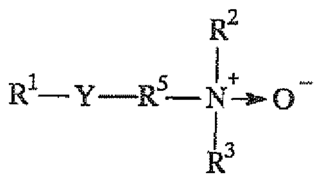

(3)

wherein $R^1$ represents an alkyl group having 1 to 22 carbon atoms or an alkenyl group having 3 to 22 carbon atoms; $R^2$ represents an alkyl group having 1 to 22 carbon atoms, an alkenyl group having 3 to 22 carbon atoms, a hydroxyalkyl group having 1 to 3 carbon atoms, or a benzyl group; $R^3$ and $R^4$ each represent an alkyl group having 1 to 3 carbon atoms, a hydroxyalkyl group having 1 to 3 carbon atoms, or a benzyl group; $R^5$ represents an alkylene group having 1 to 5 carbon atoms; Y represents $-CONR^6-$, $-NR^6CO-$, -COO-, or - OCO-, wherein $R^6$ represents a hydrogen atom or an alkyl group having 1 to 3 carbon atoms; and $X^-$ represents a halide ion, an ion of a fatty acid having 1 to 14 carbon atoms, or an ion of an alkylsulfate having 1 to 3 carbon atoms: and

component (b): a sequestering agent having a calcium-chelating constant of 4 to 12.

**2.** The antifungal composition according to claim 1, further comprising a compound represented by formula (4) as component (c):

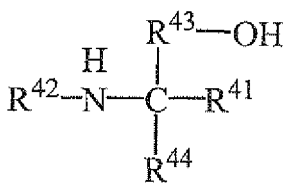

(4)

wherein $R^{41}$ represents a hydrogen atom, an alkyl group having 1 to 5 carbon atoms, or a hydroxyalkyl group having 1 to 5 carbon atoms; $R^{42}$ represents a hydrogen atom, an alkyl group having 1 to 12 carbon atoms, or a hydroxyalkyl group having 1 to 5 carbon atoms; $R^{43}$ represents an alkylene group having 1 to 5 carbon atoms; and $R^{44}$ represents an alkyl group having 1 to 5 carbon atoms or a hydroxyalkyl group having 1 to 5 carbon atoms.

**3.** The antifungal composition according to claim 1 or 2, comprising 0.01 to 5% by mass of component (a), 0.01 to 1% by mass of component (b) and 0 to 10% by mass of component (c).

## INTERNATIONAL SEARCH REPORT

International application No.
PCT/JP2008/069703

A. CLASSIFICATION OF SUBJECT MATTER
*A01N33/12*(2006.01)i, *A01N33/08*(2006.01)i, *A01N33/24*(2006.01)i, *A01N37/44*(2006.01)i, *A01P3/00*(2006.01)i

According to International Patent Classification (IPC) or to both national classification and IPC

B. FIELDS SEARCHED

Minimum documentation searched (classification system followed by classification symbols)
A01N33/12, A01N33/08, A01N33/24, A01N37/44, A01P3/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
JSTPlus(JDreamII), JST7580(JDreamII)

C. DOCUMENTS CONSIDERED TO BE RELEVANT

| Category* | Citation of document, with indication, where appropriate, of the relevant passages | Relevant to claim No. |
|---|---|---|
| X<br>Y | JP 11-158005 A (Pigeon Corp.),<br>15 June, 1999 (15.06.99),<br>Claims; Par. Nos. [0010] to [0040]; examples<br>(Family: none) | 1,3<br>1-3 |
| X<br>Y | EP 1479719 A1 (AIR PRODUCTS POLYMERS, L.P),<br>24 November, 2004 (24.11.04),<br>Claims; tables; Par. Nos. [0010] to [0015], [0057]<br>& US 2004/0235982 A1 | 1,3<br>1-3 |
| Y | JP 2003-160482 A (Menicon Co., Ltd.),<br>03 June, 2003 (03.06.03),<br>Claims; Par. Nos. [0001] to [0002], [0037], [0052]; examples<br>& US 2003/0153622 A1 & EP 1293126 A1 | 1-3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 November, 2008 (27.11.08) | 09 December, 2008 (09.12.08) |
| Name and mailing address of the ISA/<br>Japanese Patent Office | Authorized officer |
| Facsimile No. | Telephone No. |

Form PCT/ISA/210 (second sheet) (April 2007)

INTERNATIONAL SEARCH REPORT

International application No.
PCT/JP2008/069703

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-500374 A (Lonza Inc.), 07 January, 2003 (07.01.03), Claims; examples & US 6527981 B1 & EP 1185402 A1 & WO 2000/071314 A1 | 1-3 |
| Y | Special Publication. Royal Society of Chemistry, 1990, No.77, p.235-275, ISSN 0577-618X | 1-3 |
| Y | JP 8-509241 A (Kao Corp.), 01 October, 1996 (01.10.96), Claims; page 26; examples & US 2001/0029240 A1 & EP 685995 A1 & WO 1995/017817 A1 | 1-3 |
| Y | JP 2002-143277 A (Ophtecs Corp.), 21 May, 2002 (21.05.02), Claims; Par. Nos. [0009] to [0012]; examples; tables (Family: none) | 1-3 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 571554 B


### Non-patent literature cited in the description


- **Jon J. Kabara ; Koichi Yoshimura.** COSMETIC AND DRUG PRESERVATION PRINCIPLES AND PRACTICE. Fragrance Journal Ltd, 268
- **D. R. MacGregor ; P. R. Ellicker.** *Can. J. Microbiol.,* 1958, vol. 4, 499-503
- **S. G. Wilkinson.** Sensitivity to ethylenediaminetetraacetic acid, in Resistance of Pseudomonas aeruginosa. Wiley, 1975
- **S. G. Wilkinson.** Sensitivity to ethylenediaminetetraacetic acid, in Resistance of Pseudomonas aexuginosa. Wiley, 1975